# EUROPEAN PATENT APPLICATION

(11) **EP 2 328 341 A1**
(43) Date of publication of application: **01.06.2011**
(21) Application number: 09808050.0
(22) Date of filing: 17.08.2009
(51) Int. Cl.: H04N 5/225, G01C 3/06, G01S 3/782, H04N 5/222

(54) **LONG-DISTANCE TARGET DETECTION CAMERA SYSTEM**

(30) Priority: 20.08.2008 JP 2008211251
(71) Applicant: Tokyo Institute of Technology, Tokyo 152-8550 (JP)
(72) Inventor: ZHANG, Xiaolin, Yokohama-shi Kanagawa 226-8503 (JP); CHEN, Enhui, Yokohama-shi Kanagawa 226-8503 (JP); KATO, Yoshihiko, Yokohama-shi Kanagawa 226-8503 (JP)
(74) Representative: Skone James, Robert Edmund
(86) International application number: PCT/JP2009/003902
(87) International publication number: WO 2010/021114

(57) **Abstract**

Provided is a long-distance target detection camera system capable of detecting/tracking a target widely from a long distance to a short distance while simplifying the structure. The long-distance target detection camera system for detecting a long-distance target is configurged from a pair of convergence cameras (10) capable of convergence movement, a telescopic camera (20) having narrower-angle vision than that of the pair of convergence cameras (10), and a wide-angle camera (30) having wider-angle vision than that of the pair of convergence cameras (10). The telescopic camera (20) has the line of sight approximately equal to the trace line of the intersection point between the lines of sight of the pair of convergence cameras (10). The wide-angle camera (30) has the line of sight approximately equal to the line of sight of the telescopic camera (20). Further, the long-distance target detection camera system comprises a base (40) on which the cameras are mounted and motors for base movement (50) which control the movement of the base (40).

## Description

### Technical Field

The present invention relates to a long-distance target detection camera system for detecting a long-distance target, and more particularly to a long-distance target detection camera system in which cameras with different angles of view are combined.

### Background Art

The present inventor has developed various types of camera systems for target detection/tracking in which cameras with different angles of view are combined (Patent Document 1 to Patent Document 4). These systems are each basically composed of a binocular active camera for target detection/tracking installed on a base and perform the same tracking control using the same camera system irrespective of the distance from a target.

Patent Document 1: Japanese Patent Application Kokai Publication No. 2006-258543
Patent Document 2: Japanese Patent Application Kokai Publication No. 2006-329747
Patent Document 3: Japanese Patent Application Kokai Publication No. 2007-093479
Patent Document 4: Japanese Patent Application Kokai Publication No. 2007-120993

### Disclosure of the Invention

### Problems to be Solved by the Invention

However, the base line length between two lenses of the binocular cameras with respect to the distance from a target far away from the camera is insufficient to detect and track the long-distance target, so that there has been a case where satisfactory distance measurement accuracy cannot be obtained. Further, there has often been a case where the distance itself from a target is not important. In such a case, although the use of only one super telephoto camera is sufficient for detecting or tracking a long-distance target, two cameras were used to perform the detecting or tracking.

The abovementioned camera systems have an actuator capable of allowing two eyes to perform conjugate movement. However, this movement duplicates the left-right rotational movement of the base on which the camera system is installed, thereby complicating control.

Thus, there is redundancy in the number of cameras and actuators in the conventional camera system for target detection/tracking. However, a reduction in the redundancy, a reduction in the weight of the system, a reduction in the cost of the system, and a simplification of visual recognition processing are required under specified purposes or conditions.

The present invention has been made in view of the above situation, and an object thereof is to provide a long-distance target detection camera system capable of detecting/tracking a target widely from a long distance to a short distance while simplifying the structure.

### Means for Solving the Problem

To attain the above object, a long-distance target detection camera system according to the present invention may comprise a pair of convergence cameras capable of performing convergence movement; a telephoto camera having a line of sight substantially equal to the trace line of the intersection between the lines of sight of the pair of convergence cameras and having a narrower visual field than that of each of the pair of convergence cameras; a base on which the pair of convergence cameras and the telephoto camera are installed; and a motor for base movement that controls the movement of the base.

The long-distance target detection camera system may further comprise a wide-angle camera having a line of sight substantially equal to that of the telephoto camera and having a wider visual field than that of each of the pair of convergence cameras. The wide angle camera may be installed on the base.

The telephoto camera may be disposed at the middle point between the pair of convergence cameras.

The telephoto camera and/or the wide-angle camera may be fixed on the base so as to coordinate with the movement of the base.

The telephoto camera and/or the wide-angle camera may be fixed to one of the pair of convergence cameras so as to coordinate with the movement of the one convergence camera.

The convergence cameras may use one motor and one pulley to achieve convergence movement.

A control method for detecting a target from a wide range area by using the long-distance target detection camera system according to the present invention may comprise: a wide-angle camera control process, a convergence camera control process, and a telephoto camera control process.
The wide-angle camera control process may comprise: a step of imaging a wide range area using the wide-angle camera; a step of measuring the movement speed of the long-distance target detection camera system using a wide-angle image obtained in the imaging step using the wide-angle camera; and a step of performing visual feedback control for the base using the movement speed obtained in the measurement step so as to maintain the line of sight of the wide-angle camera at a predetermined position.
The convergence camera control process may comprise: a step of imaging the target using the pair of convergence cameras; a step of performing convergence movement control for the pair of convergence cameras using convergence images obtained in the imaging step using the convergence cameras; a step of measuring a distance up to the target using the rotation angles of the convergence cameras obtained in the convergence camera movement control step; and a step of performing visual feedback control for the pair of convergence cameras using the convergence images so as to maintain the lines of sight of the pair of convergence cameras at a predetermined position.
The telephoto camera control process may comprise: a step of imaging the target using the telephoto camera; a step of detecting whether there exists the target in a telephoto image obtained in the imaging step using the telephoto camera; a step of moving the line of sight of the telephoto camera such that a part of the next visual field of the telephoto camera overlaps within the range of a current telephoto image in the case where there does not exists the target in the detection step; and a step of performing visual feedback control for the telephoto camera using the telephoto image in the case where there exists the target in the detection step.

### Advantages of the Invention

The long-distance target detection camera system according to the present invention has an advantage in that it is possible to detect/track a target widely from a long distance to a short distance while simplifying the structure. Further, high-speed visual recognition processing is achieved, so that it is possible to detect/track even a target that moves at high-speed.

### Brief Description of the Drawings

FIG. 1 is a schematic view for explaining a long-distance target detection camera system according to a first embodiment of the present invention.
FIG. 2 is a schematic view for explaining a long-distance target detection camera system according to a second embodiment of the present invention.
FIG. 3 is a flowchart for explaining a wide-angle camera control flow for detecting a specific target from a wide searching area using the long-distance target detection camera system of the present invention.
FIG. 4 is a flowchart for explaining a convergence camera control flow for detecting a specific target from a wide searching area using the long-distance target detection camera system of the present invention.
FIG. 5 is a flowchart for explaining a telephoto camera control flow for detecting a specific target from a wide searching area using the long-distance target detection camera system of the present invention.

### Best Mode for Carrying Out the Invention

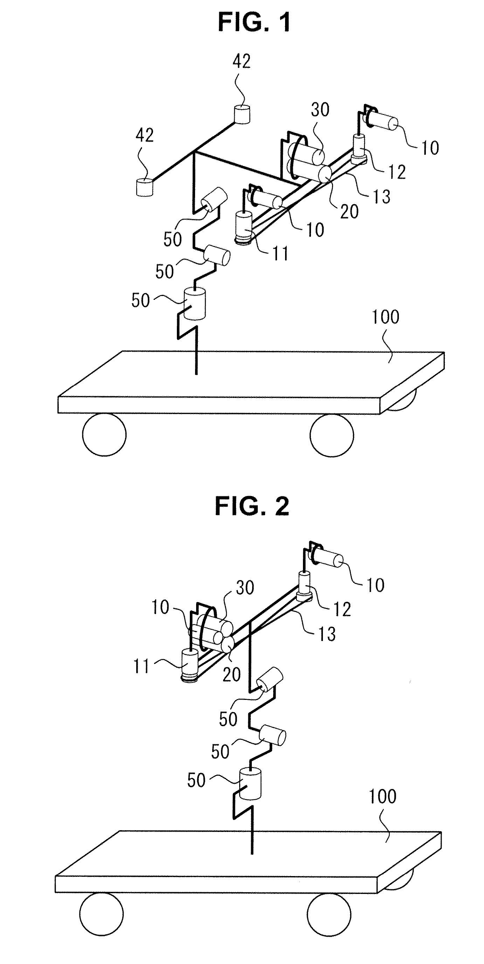

Preferred embodiments for practicing the present invention will be described below with reference to the accompanying drawings. FIG. 1 is a schematic view for explaining a long-distance target detection camera system according to a first embodiment of the present invention. As illustrated, the long-distance target detection camera system according to the first embodiment of the present invention is mainly constituted by a pair of convergence cameras 10, a telephoto camera 20, a wide-angle camera 30, a base 40 on which the cameras are installed, and motors 50 for base movement which controls the movement of the base.

The pair of convergence cameras 10 is capable of performing convergence movement. The convergence movement refers to rotational movement of the convergence cameras 10. That is, for example, when the pair of convergence cameras 10 is used to image a given object, respective cameras are rotated so as to allow the lines of sight of the cameras to be converged on the object such that imaged photographs correspond to each other. In the present specification, the convergence movement also includes "close-up movement" for imaging a close object and "spreading movement" for imaging a distant object. The convergence cameras 10 each preferably have a standard angle of view, i.e., intermediate angle of view, not a wide or telephoto angle of view.

The illustrated pair of cameras 10 uses one motor 11 and one pulley 12 to achieve the convergence movement. The motor 11 and pulley 12 are connected to each other by a belt 13. The belt 13 is looped crosswise so as to make the motor 11 and pulley 12 to be rotated in the opposite directions. This configuration allows the convergence movement of the pair of convergence cameras 10 to be controlled only by the motor 11. The present invention is not limited to the configuration using one motor and one pulley, but may adopt a configuration in which two motors are provided to drive each of the convergence cameras 10 independently of each other so as to control the convergence movement.

The telephoto camera 20 has a narrower visual field than that of each of the pair of convergence cameras 10. Further, the telephoto camera 20 has a line of sight substantially equal to the trace line of the intersection between the lines of sight of the pair of convergence cameras 10. The intersection of the line of sights of the pair of convergence cameras 10 making convergence movement draws a trace line extending from the middle point between the pair of convergence cameras 10 in the direction perpendicular to the base line of the cameras 10. Thus, the telephoto camera 20 having the line of sight substantially equal to the trace line is disposed at the middle point between the pair of convergence cameras 10. More specifically, the telephoto camera 20 is disposed at the middle point between the rotation centers of the pair of convergence cameras 10. Such arrangement of the telephoto camera 20 on the base 40 eliminates the need to provide an actuator, such as a motor, for controlling the line of sight of the telephoto camera 20. That is, the line of sight of the telephoto camera 20 is always positioned on the intersection of the line of sights of the pair of convergence cameras 10, so that when a target is captured by the pair of convergence cameras 10, the same target can be captured by the telephoto camera 20, eliminating the need to perform control of the line of sight of the telephoto camera 20 by using an actuator.

The wide-angle camera 30 has a wider visual field than that of each of the pair of convergence cameras 10. Further, the wide-angle camera 30 has a line of sight substantially equal to that of the telephoto camera 20. The wide-angle camera 30 is disposed so as to have a line of sight substantially equal to that of the telephoto camera 20, i.e., the trace line of the intersection between the lines of sight of the pair of convergence cameras 10. In the illustrative example, the wide-angle camera 30 is disposed at substantially the same position as the telephoto camera 20. That is, the wide-angle camera 30 is disposed at the mid portion between the pair of convergence cameras 10. Such arrangement of the wide-angle camera 30 on the base 40 eliminates the need to provide an actuator, such as a motor, for controlling the line of sight of the wide-angle camera 30, as in the case of the telephoto camera.

In the long-distance target detection camera system according to the present invention, the wide-angle camera is not an essential component, but the pair of convergence cameras 10 may be used as a substitute for the wide-angle camera, depending on the use purpose. That is, the standard angle of view of the convergence camera may be used in place of the wide angle of view of the wide-angle camera for long-distance target detection.

The pair of convergence cameras 10, telephoto camera 20, and wide-angle camera 30 having the above configurations are installed on the base 40. A motor 50 for base movement that controls the movement of the base 40 is connected to the base 40. In the illustrative example, the motor 50 for base movement has three motor sections for three-axis control and is configured to orient the base 40 in an arbitrary direction. The telephoto camera 20 and wide-angle camera 30 are fixed to the base 40 such that they coordinate with the movement of the base 40 thus configured. Thus, the lines of sight of the telephoto camera 20 and wide-angle camera 30 are controlled by the motor 50 for base movement.

The long-distance target detection camera system having such a configuration is mounted on a moving object 100 such as a vehicle or airplane. The long-distance target detection camera system according to the present invention can detect and track a long-distance target while moving on the moving object 100. A movement sensor 42 may be provided in the base 40 as needed. As the movement sensor 42, a sensor capable of measuring rotational or translational movement may be used. Such a sensor may be used to control the attitude of the base. One or more movement sensors 42 may be provided and, in the case where an even number of the movement sensors 42 are provided, it is preferable that the same number of the sensors be set symmetrically with respect to the center of the base.

Next, operation of the long-distance target detection camera system according to the first embodiment of the present invention will be described. Here, for example, an operation of detecting a specific target from a wide searching area and tracking the detected target will be described. First, the wide-angle camera 30 is used to start imaging an area over a wide range. Then, the imaged wide-angle image is used to measure the movement speed of the long-distance target detection camera system, and the movement of the base 40 is controlled based on the measurement result, whereby the line of sight of the wide-angle camera 30 is fixed to a predetermined position in an environment. More specifically, the movement speed of the long-distance target detection camera system is measured based on a variation in the movement of a specific point on a plurality of the wide-angle images imaged in a successive manner. That is, the control signal based on the wide-angle camera 30 is a speed signal. This speed signal is utilized as a feedback signal to perform visual feedback control for the motor 50 for base movement such that the base 40 is rotated at the same speed in the direction canceling the movement speed so as to make the line of sight of the wide-angle camera 30 stable with respect to a predetermined position in an environment.

Then, a specific target is detected from the stable wide-angle image. The target is an object having a specific shape and color and may be a moving object. Examples of the target include, e.g., an object to be searched for, such as a prey or cracks of a building. Any detection methods, such as pattern recognition, including conventional detection methods and method developed in the future may be applied to the detection of such a target. Thus, the target can be detected all over the area to be searched for.

In the wide-angle image, a resolution relative to the visual field range is low, so that the target detection only using the wide-angle image may fail to detect a small target. Thus, in the present invention, the target detection is performed using not only the wide-angle image but also a telephoto image with the line of sight made stable with respect to an environment. More specifically, the line of sight of the telephoto camera is moved such that a part of the next visual field of the telephoto camera overlaps within the range of a current telephoto image. Since the movement of the line of sight of the telephoto camera is performed using the base, the lines of sight of the wide-angle camera and convergence camera are also moved with the movement of the base. The line of sight of the telephoto camera may be moved at a constant speed or moved in a jumping fashion at predetermined intervals. That is, saccade control may be used for control of the line of sight movement. The range of the line of sight movement is set narrower than the range of the visual field of the telephoto camera so as to prevent the line of sight from falling outside the area to be searched for. As described above, it is detected whether or not there exists a target in the telephoto image and, in the case where the target does not exist, the visual line of sight of the telephoto camera is moved. Thus, the target can be detected with the use of a high-resolution telephoto image.

Then, the motor 50 for base movement is subjected to visual feedback control such that the line of sight of the telephoto camera 20 fixed to the base 40 is set on the detected target. This movement is called "saccade". Further, the motor 50 for base movement is subjected to visual feedback control such that the line of sight of the telephoto camera 20 follows the movement of the target. This movement is called "smooth pursuit". Specifically, the telephoto image imaged by the telephoto camera 20 is used to measure the position of the target in the telephoto image with respect to the line of sight of the camera. That is, the control signal based on the telephoto camera 20 is a position signal. This position signal is utilized to perform visual feedback control such that the line of sight of the telephoto camera 20 follows the target, thereby allowing the telephoto camera 20 to continue imaging the target with a high resolution.

Further, the pair of convergence cameras 10 is subjected to convergence movement control so as to image the target on which the line of sight of the telephoto camera 20 is set. That is, a difference between the positions of the target in respective convergence images imaged by the pair of convergence cameras 10 is utilized to perform convergence movement control using the motor 11. At this time, the rotation angle of each of the pair of convergence cameras 10 is used to measure the distance up to the target. Once the base line length between the pair of convergence cameras 10 and the rotation angles thereof are known, the distance up to the target can be measured based on the triangulation method.

With such control, the long-distance target detection camera system according to the present invention can detect a specific target from a wide searching area, track the target, and clearly image the target with a high resolution even if the size of the target is very small.

Next, a long-distance target detection camera system according to a second embodiment of the present invention will be described. FIG. 2 is a schematic view for explaining a long-distance target detection camera system according to the second embodiment of the present invention. In FIG. 2, the same reference numerals as those in FIG. 1 denote the same parts as those in FIG. 1, and the descriptions thereof will be omitted here. As illustrated in FIG. 2, in the long-distance target detection camera system according to the second embodiment of the present invention, the telephoto camera 20 and wide-angle camera 30 are fixed to one of the pair of convergence cameras 10. In the first embodiment, the telephoto camera 20 is disposed at the middle point between the pair of convergence cameras 10. On the other hand, in the second embodiment, the telephoto camera 20 is fixed to one of the pair of convergence cameras 10 so as to have a line of sight substantially equal to that of the one convergence camera 10. Even with this arrangement, the telephoto camera 20 has a line of sight substantially equal to the trace line of the intersection between the lines of sight of the pair of convergence cameras 10. Similarly, the wide-angle camera 30 is fixed to one of the pair of convergence cameras 10 so as to have a line of sight substantially equal to that of the telephoto camera 20. The telephoto camera 20 and wide-angle camera 30 are thus fixed to one of the pair of convergence cameras 10, so that they coordinate with the movement of the one convergence camera 10.

The basic control principle in the second embodiment is the same as that in the first embodiment illustrated in FIG. 1. Hereinafter, with reference to a flowchart, a control flow of the long-distance target detection camera system according to the first or second embodiment of the present invention will be described in more detail.

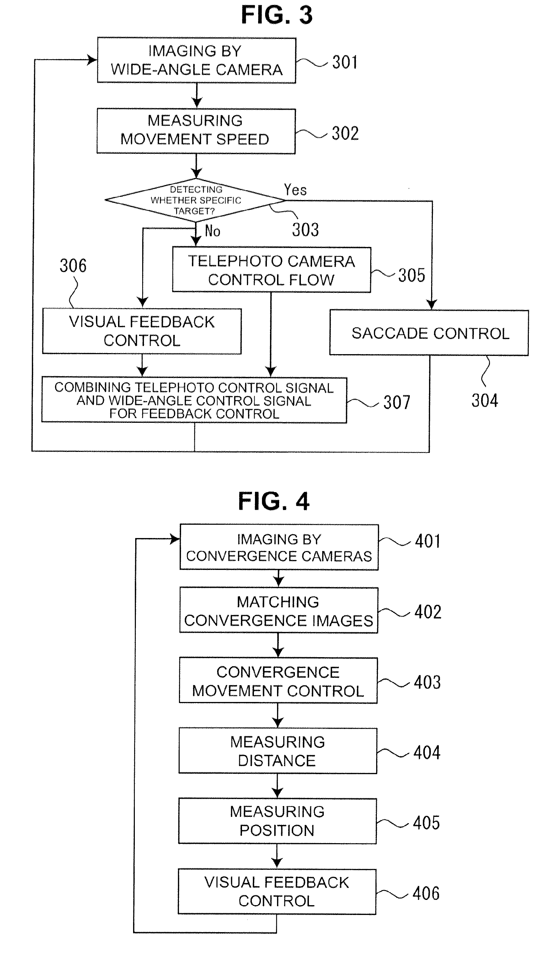

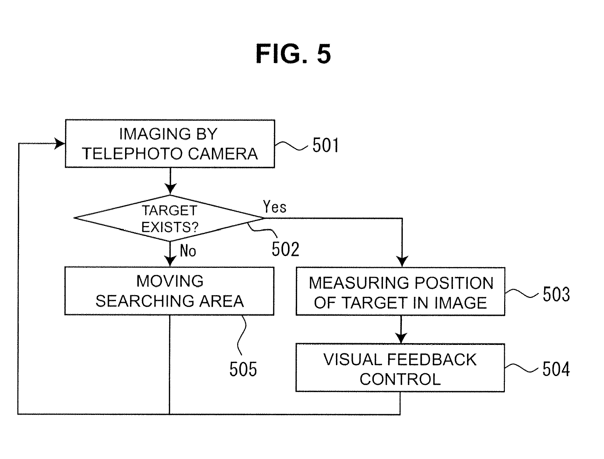

FIGS. 3 to 5 are flowcharts for explaining a control flow for detecting a specific target from a wide searching area using the long-distance target detection camera system of the present invention. FIG. 3 is a control flowchart of the wide-angle camera, FIG. 4 is a control flowchart of the pair of convergence cameras, and FIG. 5 is a control flowchart of the telephoto camera.

As illustrated in FIG. 3, in the control process of the wide-angle camera, the wide-angle camera is used to image a wide-range area (step 301). Then, the imaged wide-angle image is used to measure the movement speed of the long-distance target detection camera system (step 302). As described above, the movement speed of the long-distance target detection camera system is measured based on a variation in the movement of a specific point on a plurality of the wide-angle images imaged in a successive manner. Then, it is detected whether or not there exists a specific target in the imaged wide-angle image (step 303). In the case where the target is detected, the base is subjected to saccade control such that the detected target is positioned at, e.g., the center of the wide-angle image (step 304). On the other hand, in the case where the target is not detected, the later-described control flow of the telephoto camera is executed (step 305). While the target is searched for by using the telephoto camera, the base is subjected to visual feedback control using the measured movement speed so as to maintain the line of sight of the wide-angle camera at a predetermined position (step 306). Then, the control signal based on the telephoto camera and control signal based on the wide-angle camera are combined so as to perform visual feedback control for the base (step 307). As described above, the control signal based on the telephoto camera is a position signal, and the control signal based on the wide-angle camera is a speed signal. These signals are each multiplied by a predetermined gain and then added to each other for use as a feedback control signal for the base.

Then, as illustrated in FIG. 4, in the control process of the pair of convergence cameras, the pair of convergence cameras is used to image a target (step 401). As described in the control flow of the wide-angle camera, when the imaging line of sight of the wide-angle camera is maintained at a predetermined position, the base is always maintained in a specific direction. Accordingly, the pair of convergence cameras is maintained in a specific direction. Then, images imaged by the convergence cameras are matched to each other (step 402) so as to perform the convergence movement control for the convergence cameras (step 403). In a state where the wide-angle camera is controlled such that the target is positioned at the center of the wide-angle image, each of the convergence cameras is controlled such that the target is positioned at the center of each of the convergence images, whereby the lines of sight of the convergence cameras coincide with each other. The rotation angles of the convergence cameras obtained at this time are used to measure the distance up to the target (step 404). As described above, for the distance measurement, the triangulation method may be used. Then, the position (coordinate) of the target is measured (step 405). Although the coordinate of the target is also measured here, it need not be measured in the case where the position information is unnecessary. Then, in order to maintain the lines of sight of the convergence cameras at a predetermined position, the convergence images are used to perform visual feedback control for the pair of convergence cameras (step 406). This control is performed such that the target is positioned on the trace line of the intersection between the lines of sight of the pair of convergence cameras.

Then, as illustrated in FIG. 5, the telephoto camera is used to image the target (step 501). When the target exists on the telephoto image of the telephoto camera (step 502), the position of the target is measured (step 503). Then, visual feedback control is performed such that the target is included in the telephoto image (step 504). On the other hand, when the target does not exist on the telephoto image of the telephoto camera (step 502), the line of sight of the telephoto camera is moved such that a part of the next visual field of the telephoto camera overlaps within the range of a current telephoto image so as to move the searching area (step 505).

With such control, it is possible to detect a specific target from a wide searching area, measure the distance up to the target, and clearly image the target with a high resolution using the telephoto camera.

The control flows as described above may be selectively used depending on the distance up to the target. In the case where a moving object on which such configured long-distance target detection camera system of the present invention is mounted is moved toward a long-distance target detected and tracked, the long-distance target detection camera system is controlled as follows.

In the case where the distance up to the target is large, the wide-angle control flow (FIG. 3) and the telephoto camera control flow (FIG. 5) are used to search for the target. When the target has been detected, saccade control is performed followed by visual feedback control while the target position is being measured according to the telephoto camera flow. Then, the moving object is caused to move toward a position at which the target exists.

When the moving object on which the long-distance target detection camera system of the present invention is mounted has come close to the target to some extent, the wide-angle camera control flow (FIG. 3) and convergence camera control flow (FIG. 4) are used to measure the distance or position of the target with a high accuracy and continue imaging the target under visual feedback control. As a result, it is possible for the moving object to come close accurately to the target.

As described above, according to the long-distance target detection camera system of the present invention, it is possible to detect from a specific target from a wide searching area, track the target, and to come close to the target.

The long-distance target detection camera system of the present invention, which is mounted on a moving object such as a vehicle or airplane, can detect and track a long-distance target or find cracks and the like of a building as a target to be detected from a long distance. When a long-distance target needs to be detected, the convergence cameras are subjected to convergence movement based on the wide-angle image imaged by the vvide-angle camera to acquire rough distance information. Then, the telephoto camera is used to image a target to be focused for detecting and focusing. For the detection method of the target, while the visual feedback control is performed based on the wide-angle image imaged by the wide-angle camera and the convergence images imaged by the convergence cameras so as to make the line of sight stable, the line of sight of the telephoto camera is moved so as to scan the searching area. Once the target is detected, it is possible to come close to the target while tracking the target under visual feedback control. When the distance up to the target has become smaller, the convergence cameras may be used in place of the telephoto camera so as to track the target.

The configuration of the long-distance target detection camera system according to the present invention can eliminate the need to provide an actuator for the telephoto camera or wide-angle camera to simplify the structure, thus contributing to a reduction in the weight and size of the system. Further, this simple structure makes the control simple, thereby achieving the high-speed target detection or tracking processing.

The long-distance target detection camera system according to the present invention is not limited to the above illustrative examples but may variously be modified within the scope of the present invention. For example, the pair of convergence cameras may be a plurality of convergence camera sets.

### Explanation of Reference Symbols

- 10:: Pair of convergence cameras
- 11:: Motor
- 12:: Pulley
- 13:: Belt
- 20:: Telephoto camera
- 30:: Wide-angle camera
- 40:: Base
- 42:: Movement sensor
- 50:: Motor for base movement
- 100:: Moving object

## Claims

1. A long-distance target detection camera system for detecting a long-distance target, the system comprising:
a pair of convergence cameras capable of performing convergence movement;
a telephoto camera having a line of sight substantially equal to the trace line of the intersection between the lines of sight of the pair of convergence cameras and having a narrower visual field than that of each of the pair of convergence cameras;
a base on which the pair of convergence cameras and the telephoto camera are installed; and
a motor for base movement that controls the movement of the base.

2. The long-distance target detection camera system according to claim 1, further comprises a wide-angle camera having a line of sight substantially equal to that of the telephoto camera and having a wider visual field than that of each of the pair of convergence cameras, the wide angle camera being installed on the base.

3. The long-distance target detection camera system according to claim 1 or 2, in which the telephoto camera is disposed at the middle point between the pair of convergence cameras.

4. The long-distance target detection camera system according to any of claims 1 to 3, in which the telephoto camera and/or the wide-angle camera are fixed on the base so as to coordinate with the movement of the base.

5. The long-distance target detection camera system according to claim 1 or claim 2, in which the telephoto camera and/or the wide-angle camera are fixed to one of the pair of convergence cameras so as to coordinate with the movement of the one convergence camera.

6. The long-distance target detection camera system according to any of claims 1 to 5, in which the convergence cameras use one motor and one pulley to achieve convergence movement.

7. A control method for detecting a target from a wide range area by using the long-distance target detection camera system as claimed in any of claims 2 to 6, the method comprising:
a wide-angle camera control process, a convergence camera control process, and a telephoto camera control process,
the wide-angle camera control process comprising:
a step of imaging a wide range area using the wide-angle camera;
a step of measuring the movement speed of the long-distance target detection camera system using a wide-angle image obtained in the imaging step using the wide-angle camera;
a step of performing a visual feedback control for the base using the movement speed obtained in the measurement step so as to maintain the line of sight of the wide-angle camera at a predetermined position,
the convergence camera control process comprising:
a step of imaging the target using the pair of convergence cameras;
a step of performing convergence movement control for the pair of convergence cameras using convergence images obtained in the imaging step using the pair of convergence cameras;
a step of measuring a distance up to the target using the rotation angles of the convergence cameras obtained in the convergence camera movement control step; and
a step of performing visual feedback control for the pair of convergence cameras using the convergence images so as to maintain the lines of sight of the pair of convergence cameras at a predetermined position, and
the telephoto camera control process comprising:
a step of imaging the target using the telephoto camera;
a step of detecting whether there exists the target in a telephoto image obtained in the imaging step using the telephoto camera;
a step of moving the line of sight of the telephoto camera such that a part of the next visual field of the telephoto camera overlaps within the range of a current telephoto image in the case where there does not exist the target in the detection step; and
a step of performing visual feedback control for the telephoto camera using the telephoto image in the case where there exists the target in the detection step.
